# EUROPEAN PATENT APPLICATION

(11) **EP 1 652 694 A1**
(43) Date of publication of application: **03.05.2006**
(21) Application number: 04771406.8
(22) Date of filing: 03.08.2004
(51) Int. Cl.: B60C 11/04, B60C 11/13

(54) **PNEUMATIC TIRE**

(30) Priority: 08.08.2003 JP 2003290235
(71) Applicant: THE YOKOHAMA RUBBER CO., LTD., Tokyo 105-8685 (JP)
(72) Inventor: KOBAYASHI, Hironori, The Yokohama Rubber Co., Ltd., Tokyo 1058685 (JP)
(74) Representative: HOFFMANN EITLE
(86) International application number: PCT/JP2004/011419
(87) International publication number: WO 2005/014308

(57) **Abstract**

In a pneumatic tire that has four grooves in the circumferential direction, since an optimal ground-contact pressure at edges of each rib is influenced by a relative ratio to a ground-contact pressure at the middle position of each rib, groove angles and a rib sectional shape are optimized so that a ground-contact pressure distribution at a regular internal pressure and 100% load has a ratio of center-rib-edge ground-contact pressure to center-rib-middle ground-contact pressure from 0.80 to 1.00, a ratio of second-rib-inner-edge ground-contact pressure to second-rib-middle ground-contact pressure from 0.80 to 1.00, a ratio of second-rib-outer-edge ground-contact pressure to second-rib-middle ground-contact pressure from 0.75 to 0.95, a ratio of shoulder-rib-inner-edge ground-contact pressure to shoulder-rib-middle ground-contact pressure from 0.80 to 0.95, and a ratio of shoulder-rib-outer-edge ground-contact pressure to shoulder-rib-middle ground-contact pressure from 0.85 to 1.00.

## Description

### TECHNICAL FIELD

The present invention relates to a pneumatic tire that suppresses uneven wear.

### BACKGROUND ART

Hereinafter, a pneumatic tire will be explained.

It has been known that shoulder wear (stepped wear), which occurs at a shoulder portion, and railway wear, which occurs along a groove side (rib edge), easily occur in steering-axle tires of heavy-load vehicles such as trucks or buses. If the wear occurs nonuniformly on the circumference of the tire and the tire thereby forms a polygonal shape as a whole, the vehicle vibrates, so that the tire is replaced with a new one. As a technique for reducing the uneven wear, Japanese Patent Application Laid-open S61-143205 discloses a pneumatic tire with an improved profile, and Japanese Patent Application Laid-open H10-315712 discloses an improved rubber material.

However, the techniques of improving the profile and the technique of improving the rubber material disclosed in the above literatures are not satisfactory enough.

The present invention has been made in view of the above problem, and it is an object of the present invention to provide a pneumatic tire that suppresses the uneven wear, such as the shoulder wear and the railway wear, in consideration of an ideal ground-contact pressure distribution, by considering the ground-contact pressure distribution of a tire surface in order to suppress uneven wear.

### DISCLOSURE OF THE INVENTION

According to an aspect of the present invention, in a pneumatic tire, when the pneumatic tire is mounted on a regular rim in accordance with standards, and has a regular internal pressure, and 100% load is applied to the pneumatic tire, ground-contact pressure is distributed so that a ratio of center-rib-edge ground-contact pressure to center-rib-middle ground-contact pressure is from 0.80 to 1.00, a ratio of second-rib-inner-edge ground-contact pressure to second-rib-middle ground-contact pressure is from 0.80 to 1.00, a ratio of second-rib-outer-edge ground-contact pressure to second-rib-middle ground-contact pressure is from 0.75 to 0.95, a ratio of shoulder-rib-inner-edge ground-contact pressure to shoulder-rib-middle ground-contact pressure is from 0.80 to 0.95, and a ratio of shoulder-rib-outer-edge ground-contact pressure to shoulder-rib-middle ground-contact pressure is from 0.85 to 1.00.

According to another aspect of the present invention, in an pneumatic tire, an inner groove angle, which is an angle between a wall of an inner groove and a plane that extends from an open end of the inner groove toward a base of the inner groove, is from 10 degrees to less than 20 degrees, and a outer groove angle, which is an angle between a wall of an outer groove and a plane that extends from an open end of the outer groove toward a base of the outer groove, is from -10 degrees to less than 20 degrees.

According to still another aspect of the present invention, in a pneumatic tire, an inner groove angle, which is an angle between a wall of an inner groove and a plane that extends from an open end of the inner groove toward a base of the inner groove, is from 10 degrees to less than 20 degrees, an outer groove angle, which is an angle between a wall of an outer groove and a plane that extends from an open end of the outer groove toward a base of the outer groove, is from -10 degrees to less than 20 degrees, and when the pneumatic tire is mounted on a regular rim in accordance with standards, and has a regular internal pressure, and 100% load is applied to the pneumatic tire, ground contact pressure is distributed so that a ratio of center-rib-edge ground-contact pressure to center-rib-middle ground-contact pressure is from 0.80 to 1.00, a ratio of second-rib-inner-edge ground-contact pressure to second-rib-middle ground-contact pressure is from 0.80 to 1.00, a ratio of second-rib-outer-edge ground-contact pressure to second-rib-middle ground-contact pressure is from 0.75 to 0.95, a ratio of shoulder-rib-inner-edge ground-contact pressure to shoulder-rib-middle ground-contact pressure is from 0.80 to 0.95, and a ratio of shoulder-rib-outer-edge ground-contact pressure to shoulder-rib-middle ground-contact pressure is from 0.85 to 1.00.

According to the above aspects of the invention, it becomes possible to suppress both the shoulder wear and the railway wear in a tire that is used for the steering axle of a heavy-load vehicle has repeatedly traveled.

### BRIEF DESCRIPTION OF THE DRAWINGS

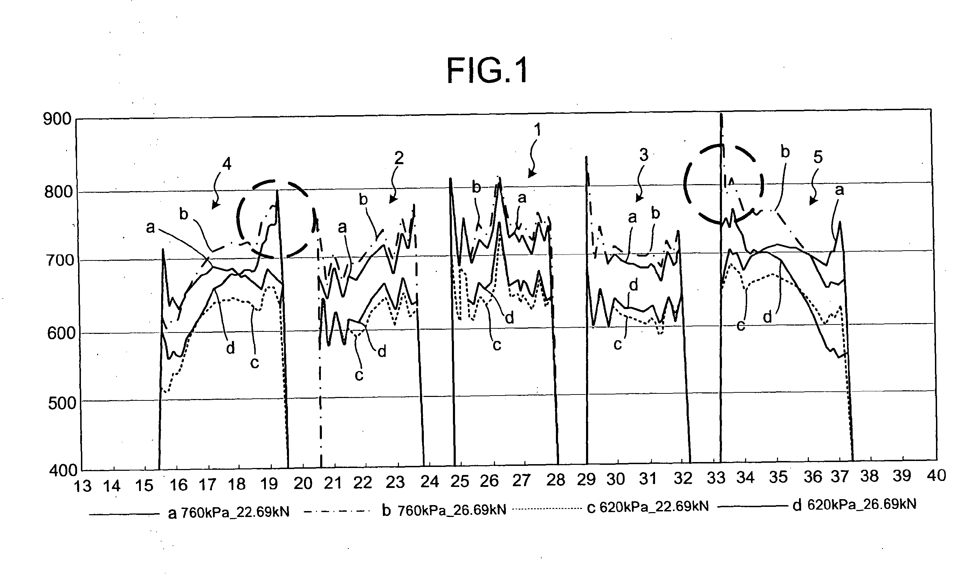

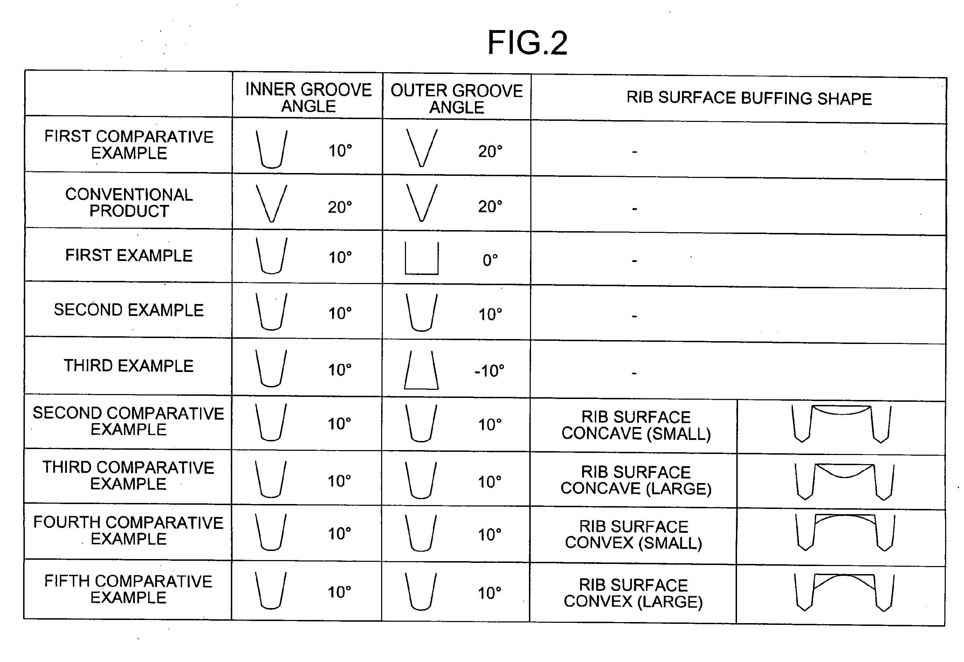

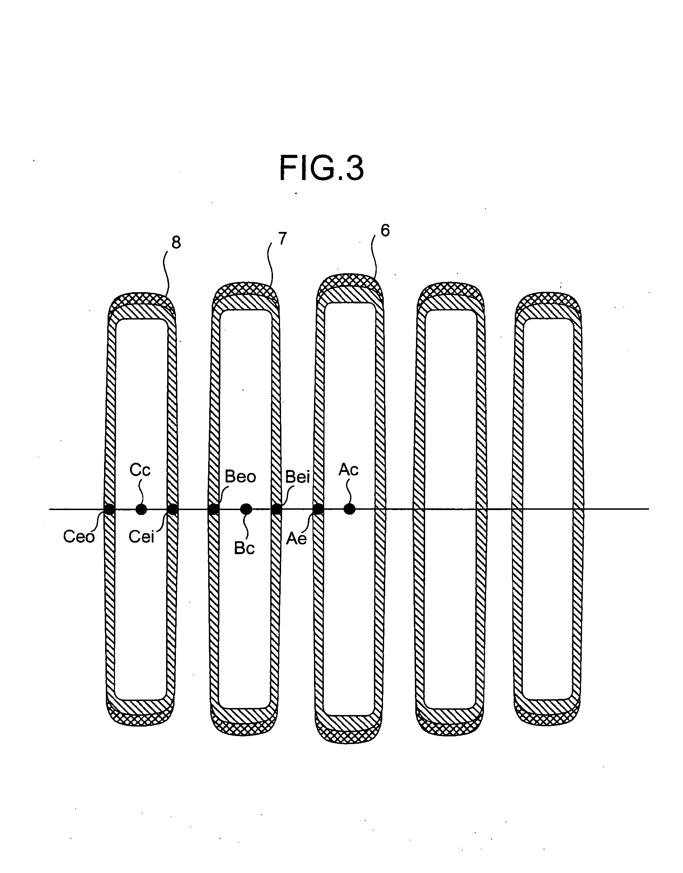

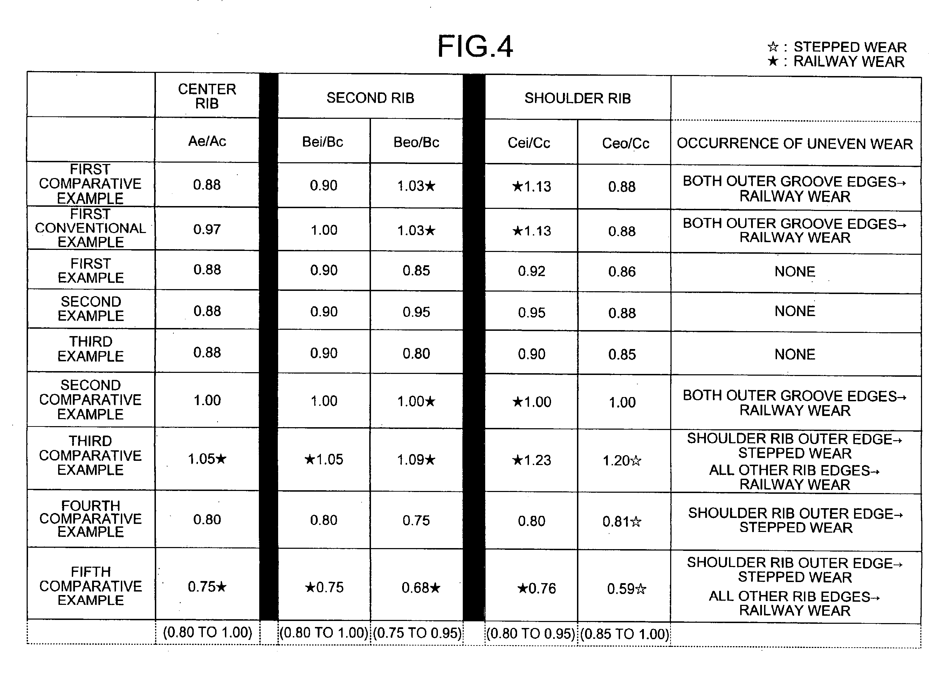

Fig. 1 is a graph of a ground-contact pressure distribution of a typical pneumatic tire; Fig. 2 is a table of groove angles and rib section shapes of tires used in an experiment; Fig. 3 is a schematic for explaining positions where rib ground-contact pressures are measured; and Fig. 4 is a table of experimental results corresponding to the respective pneumatic tires mentioned in Fig. 2.

### BEST MODE FOR CARRYING OUT THE INVENTION

Exemplary embodiments of a pneumatic tire according to the present invention are explained in detail below with reference to the accompanying drawings. However, the present invention is not limited by this embodiment.

Fig. 1 is a graph of a ground-contact distribution of a typical pneumatic tire that has four grooves along the circumferential direction. The vertical axis represents ground-contact pressure (kilopascals), and the horizontal axis represents length in the width direction of the tire. As can be seen in this graph, in the pneumatic tire that has four grooves along the circumferential direction, the ground-contact pressure acts on five blocks 1 to 5. The block 1 at the center is referred to as a center rib, the blocks 2 and 3 on both sides of the block 1 are referred to as second ribs, and blocks 4 and 5 at both the ends of the tire are referred to as shoulder ribs.

Ground-contact distribution patterns corresponding to four cases (indicated by symbols a to d) with various tire air pressures and loads are shown in this graph. For each rib, the alternate long-and-short dash line b represents the ground-contact distribution pattern when the air pressure of the pneumatic tire is 760 kilopascals and the load applied to the rib is 26.69 kilonewtons. From these alternate long-and-short dash lines b it can be confirmed that the ground-contact pressure rises steeply at the edges of the ribs. Experiments, research, and examination performed by the inventor showed that such a rise in the ground-contact pressure at the edges of the ribs is the main cause of the railway wear.

The inventor then carried out an experiment in which he divided the groove angels of the two grooves on each side of the tire (in all four grooves) into an inner groove angle and an outer groove angle in the width direction, and independently varied those angles. The inner groove angle is an angle between walls of the groove, of the two grooves on one side of the tire, toward the tire equatorial-plane. On the other hand, the outer groove angle is an angle between walls of the other groove.

In addition, in the experiment, comparisons with tires that have rib sectional shapes changed by buffing were also carried out. A tire air pressure of 760 kilopascals (regular internal pressure) and a load of 27440 Newtons (100% load) were provided as experimental conditions, and evaluation was carried out with respect to uneven wear conditions for a drive of 60,000 miles (approximately 96,558 kilometers) by a road test. In addition, a pressure distribution was also measured by using a device that precisely analyzes a change in a pressure-sensitive paper.

Fig. 2 is a table of groove angles and rib section shapes of various tires used in the experiment. A total of nine tires, including a conventional product, were used. Among the remaining eight tires, five tires had various groove angles and four tires had various sectional shapes. Of these tires, tires according to the present invention are provided as an example, and the other tires are provided as a conventional product or a comparative example. The inner groove angle and the outer groove angle correspond to an angle between the groove wall and a hypothetical plane drawn vertically from the open end of the groove toward the base on the groove. Moreover, if the groove wall inclines away from the hypothetical plane, the angle between the groove wall and the hypothetical plane is assumed to be positive.

Fig. 3 is a schematic for explaining the positions where the ground-contact pressure is measured. A ground-contact pressure 6 of the center rib, a ground-contact pressure at the center in the width direction of the rib is indicated by Ac, and a ground-contact pressure at the edge of the rib is indicated by Ae. Moreover, in a ground-contact pressure 7 of the second rib located next to the center rib, a ground-contact pressure at the center in the width direction of the rib is indicated by Bc, a ground-contact pressure at an inner edge of the rib is indicated by Bei, and a ground-contact pressure at an outer edge of the rib is indicated by Beo. Furthermore, in a ground-contact pressure 8 of the shoulder rib located at the outer side of the second rib, a ground-contact pressure at the center in the width direction of the rib is indicated by Cc, a ground-contact pressure at an inner edge of the rib is indicated by Cei, and a ground-contact pressure at an outer edge of the rib is indicated by Ceo. Although a typical tire has two second ribs and two shoulder ribs, only the ribs on the outer side are considered here since the ribs are almost symmetrical with respect to the tire equatorial plane.

Fig. 4 is a table of experimental results for pneumatic tires mentioned in Fig. 2. A filled star mark beside a ground-contact pressure means that a railway wear has occurred. Moreover, a hollow star mark beside a ground-contact pressure means that stepped wear has occurred. It is apparent that neither railway wear nor stepped wear occurred in the first example to the third example according to the present invention, and the present invention is effective in suppressing of both types of wear. It is assumed here that the pneumatic tires are mounted on regular rims in accordance with standards.

In a first comparative example with the groove angles as shown in Fig. 2, railway wear occurred at the outer edge of the second rib and the inner edge of the shoulder rib, that is, at both edges of the outer groove. In case of the first comparative example, a ratio of Beo to Bc, that is, Beo/Bc was 1.03, and a ratio of Cei to Cc, that is, Cei/Cc was 1.13. Similarly, railway wear occurred at both edges of the outer groove in the conventional example. In case of the conventional example Beo/Bc was 1.03, and Cei/Cc was 1.13.

In a second comparative example, adopted were inner and outer groove angles (identical to those in the second example) with which neither railway wear nor stepped wear occurred, and the rib sectional shape were made a small concave shape. The experimental result for the second comparative example shows that railway wear occurred at both edges of the outer groove. In case of the second comparative example, Beo/Bc was 1.00, and Cei/Cc was 1.00. In a third comparative example, the degree of the concave shape of the rib sectional shape was made larger. The experimental result for the third comparative example shows that stepped wear occurred at the outer edge of the shoulder rib, and railway wear occurred at the edges of the other ribs. In case of the third comparative example, Ceo/Cc at the outside of the shoulder rib, where stepped wear occurred, was 1.20, Ae/Ac at the outside of the center rib, where railway wear occurred, was 1.05, and Bei/Bc and Beo/Bc at both ends of the second rib were 1.05 and 1.09, respectively. Furthermore, Cei/Cc at the inside of the shoulder rib was 1.23, which is high.

In a fourth comparative example, adopted were inner and outer groove angles (identical to those in the second example) with which neither railway wear nor stepped wear occurred, and the rib sectional shape was made a small convex shape in contrast to the above. The experimental result for the fourth comparative example shows that stepped wear occurred at the outer edge of the shoulder rib. In case of the fourth comparative example, Ceo/Cc was 0.81. In a fifth comparative example, the degree of a concave shape of the rib sectional shape was made larger. The experimental result for the fifth comparative example shows that stepped wear occurred at the outer edge of the shoulder rib, and railway wear occurred at the edges of the other ribs. In the case of the fifth comparative example, Ceo/Cc at the outside of the shoulder rib, where stepped wear occurred, was 0.59, Ae/Ac at the outside of the center rib, where railway wear occurred, was 0.75, and Bei/Bc and Beo/Bc at both ends of the second rib were 0.75 and 0.68, respectively. Furthermore, Cei/Cc at the inside of the shoulder rib was 0.76, which was low.

Thus, as a result of the inventor's research, it was found that, even if the rib sectional shape is physically made a convex shape, it does not simply decrease the ground-contact pressure at edges of each rib and eliminate railway wear and stepped wear. Moreover, an optimal ground-contact pressure at edges of each rib is affected by a relative ratio to a ground-contact pressure at the middle position of each rib, and the optimal ground-contact pressure has upper and lower limits.

Therefore, by integrating conditions, of tires that have the various types of groove angles and rib sectional shapes, the inventor found that if 0.80≤Ae/Ac≤1.00, 0.80≤Bei/Bc≤1.00, 0.75≤Beo/Bc≤0.95, 0.80≤Cei/Cc≤0.95, and 0.85≤Ceo/Cc≤1.00 then neither railway wear nor stepped wear occur. Accordingly, speaking broadly, such a pneumatic tire that has ground-contact pressure distribution that gradually decreases from the middle of the rib toward the edges is ideal.

In addition, it was found that, based on a relationship between Fig. 2 and Fig. 4, that the optimal range of values of Ae/Ac, Bei/Bc, Beo/Bc, Cei/Cc, and Ceo/Cc can be realized by providing a inner groove angle from 10 degrees to less than 20 degrees, and an outer groove angle from -10 degrees to less than 20 degrees. It is conceivable that reliability in suppression of uneven wear further improves if the inner groove angle and the outer groove angle are set to have narrower ranges, for example, an inner groove angle of 10 degrees and an outer groove angle from -10 degrees to 10 degrees. Also, the optimal ground-contact pressure ratios can be achieved by providing the rib sectional shape as a partially convex or concave shape or a normal profile shape.

For example, in the second comparative example (see Fig. 4), by forming the outside of the second rib and the inside of the shoulder rib in a slightly concave shape, Beo/Bc and Cei/Cc can be kept within the optimal range. Moreover, in the fourth comparative example, Ceo/Cc can be kept in the optimal range by forming only the outside of the shoulder rib in a normal profile shape, in addition, ground-contact distribution can be kept within the optimal range by use of sipes, which are minute cuts formed on the edges of the ribs.

A circumferential shape of the grooves, that is, a tread pattern may be rectilinear throughout the entire circumference of the tire, or may be in a curvy zigzag condition, as long as the above groove angles are satisfied. Sectional shapes of the respective grooves are not necessarily symmetrical as long as the above groove angles are satisfied.

### INDUSTRIAL APPLICABILITY

As explained above, a pneumatic tire according to the present invention can be used for the steering axle of a heavy-load vehicle, and in particular, is suitable for suppressing shoulder wear and railway wear that occur in the pneumatic tire.

## Claims

1. A pneumatic tire comprising four grooves in a circumferential direction, wherein
when the pneumatic tire is mounted on a regular rim in accordance with standards, and has a regular internal pressure, and 100% load is applied to the pneumatic tire, ground-contact pressure is distributed so that
a ratio of center-rib-edge ground-contact pressure to center-rib-middle ground-contact pressure is from 0.80 to 1.00,
a ratio of second-rib-inner-edge ground-contact pressure to second-rib-middle ground-contact pressure is from 0.80 to 1.00,
a ratio of second-rib-outer-edge ground-contact pressure to second-rib-middle ground-contact pressure is from 0.75 to 0.95,
a ratio of shoulder-rib-inner-edge ground-contact pressure to shoulder-rib-middle ground-contact pressure is from 0.80 to 0.95, and
a ratio of shoulder-rib-outer-edge ground-contact pressure to shoulder-rib-middle ground-contact pressure is from 0.85 to 1.00.

2. A pneumatic tire comprising four grooves that include two inner grooves and two outer grooves along a width of the pneumatic tire, wherein
an inner groove angle, which is an angle between a wall of an inner groove and a plane that extends from an open end of the inner groove toward a base of the inner groove, is from 10 degrees to less than 20 degrees, and
a outer groove angle, which is an angle between a wall of an outer groove and a plane that extends from an open end of the outer groove toward a base of the outer groove, is from -10 degrees to less than 20 degrees.

3. A pneumatic tire comprising four grooves that include two inner grooves and two outer grooves along a width of the pneumatic tire, wherein
an inner groove angle, which is an angle between a wall of an inner groove and a plane that extends from an open end of the inner groove toward a base of the inner groove, is from 10 degrees to less than 20 degrees,
an outer groove angle, which is an angle between a wall of an outer groove and a plane that extends from an open end of the outer groove toward a base of the outer groove, is from -10 degrees to less than 20 degrees, and
when the pneumatic tire is mounted on a regular rim in accordance with standards, and has a regular internal pressure, and 100% load is applied to the pneumatic tire, ground contact pressure is distributed so that
a ratio of center-rib-edge ground-contact pressure to center-rib-middle ground-contact pressure is from 0.80 to 1.00,
a ratio of second-rib-inner-edge ground-contact pressure to second-rib-middle ground-contact pressure is from 0.80 to 1.00,
a ratio of second-rib-outer-edge ground-contact pressure to second-rib-middle ground-contact pressure is from 0.75 to 0.95,
a ratio of shoulder-rib-inner-edge ground-contact pressure to shoulder-rib-middle ground-contact pressure is from 0.80 to 0.95, and
a ratio of shoulder-rib-outer-edge ground-contact pressure to shoulder-rib-middle ground-contact pressure is from 0.85 to 1.00.
